# EUROPEAN PATENT APPLICATION

(11) **EP 4 032 433 A1**
(43) Date of publication of application: **27.07.2022**
(21) Application number: 20883081.0
(22) Date of filing: 11.05.2020
(51) Int. Cl.: A47B 57/42, G01G 3/12

(54) **WEIGHING SUPPORT BRACKET**

(30) Priority: 30.10.2019 ES 201931785 U
(71) Applicant: Dinacell Electronica, S.L., 28529 Rivas Vaciamadrid (ES)
(72) Inventor: GONZÁLEZ GALLEGOS, Rafael, 28529 Rivas Vaciamadrid (ES)
(74) Representative: Elzaburu S.L.P.
(86) International application number: PCT/ES2020/070300
(87) International publication number: WO 2021/084144

(57) **Abstract**

A weighing plate supporting a dismantlable rack, comprising a deformable portion (212) in proximity to the load-bearing rear edge (214) of the weighing plate (211); the deformable portion (212) comprises at least one deformable cut-out (213) and at least one strain gauge unit (217) mechanically coupled to the deformable portion (212) that is adapted to measure deformation when at least one load (112) is arranged on the shelf of the rack; and the at least one strain gauge unit (217) is arranged in shear mode for measuring the deformation of the deformable portion (212).

## Description

### Object

The present invention relates to an easy-to-assemble weighing support plate for removable shelf racks to allow the weighing and control of loads on the shelf of the racks, regardless of the position of the load on said shelf.

### Background art

A removable shelf with pillars having a series of slots for coupling a shelf support plate is known in the field of the art. The pillars allow the support plates to be positioned at a certain height, being sufficiently rigid to fully withstand the stress to which they are subjected by the loads placed on the shelves.

The shelf support plate comprises a simple coupling to the rear vertical pillar of the shelf that, in addition to being safe, is easy to assemble and disassemble.

However, the weight on the shelves or the amount of products on the rack cannot be known on the basis of the construction of the rack itself.

### Summary of the invention

The present invention aims to resolve one or more of the drawbacks described above by using a weighing support plate as defined in the claims.

The support plates are made of a material having a degree of elasticity characteristic of the material, such that a weighing support plate is configured to provide a minimum deformation threshold value of the weighing support plate, wherein the deformation value is measurable by a strain gauge unit, namely a strain gauge attached to a lateral surface of the weighing support plate.

The deformation measured by the strain gauge unit depends on the combined weight of at least one shelf of the rack and on at least one load located above the shelf of the rack. The shelf is disposed integrally on the upper surface of at least two supporting weighing plates.

The weighing support plate comprises a deformable portion configured to provide a regulated and controlled deformation. The strain gauge unit is coupled integrally to a side surface of the deformable portion to provide a value of the deformation of the deformable portion of the weighing support plate that is related to the weight transmitted to the weighing support plate from the shelf of the rack.

The sum of all the stresses of the different weighing support plates mechanically coupled to the shelves of the rack provides the combined weight of the shelf and the loads placed on the shelves.

The deformable portions of the weighing support plates and the corresponding strain gauges are distributed so that the measured weight is independent from the physical location of the load arranged on the shelf of the rack, because the shear stress is constant and independent of the distance from the load to the rear edge of the shelf. The arrangement of the load towards a weighing plate, for example the right plate, increases the load by decreasing the load on the left weight plate from which it moves away. Thus, the total load is equal to the weight of the loads, and vice versa. The sum of the load of the left weighing plate and the right weighing plate will be equal to the weight of the object.

The strain gauges attached to the deformable portions measure the shear deformation on the weighing support plate between the points of the loads and the vertical of the strain gauges on the weighing plate. Therefore, the strain gauges are arranged towards the supporting rear edge of the weighing support plate. That is, the strain gauge sensor measures the load transmitted by the weight of the shelf and the loads arranged on the shelf towards the load-bearing rear edge of the weighing support plate.

To take advantage of all the space of the shelf, it is possible to arrange couplings with the shelf so that it rests only from the vertical of the strain gauges towards the front front edge, minimizing the loads between the sensors and the rear edge of the shelf, which would not in pure theory affect the measured shear deformation and therefore the measurement of the strain gauges will not consider loads between the sensors and the coupling to the rear vertical profile of the shelf.

The weighing support plate generally has a triangular square shape, which allows easy exchange of the height situation of the weighing support plate on the shelf; it is also sufficiently rigid to support the weight of the shelf and the weight arranged on top of the shelf of the rack.

The deformable portion of the weighing support plate may comprise at least one deformable recess, which has the interior emptied, and is disposed in proximity to the load-bearing rear edge of the weighing support plate; and further comprises the strain gauge unit integrally attached to a flat surface of the deformable portion; such that, the deformable portion comprising at least one deformable recess and a flat surface allows for the deformation by flexibility of the weighing support plate, making it possible, on the one hand, to transfer the deformation from the deformable portion to the strain gauge unit and, on the other hand, to maintain the structural rigidity of the weighing support plate that can support the common weight and stresses caused by the shelf of the rack and the loads disposed on the shelf.

The at least one deformable recess is designed and sized according to the stresses to be supported and the material from which the support plates themselves are made. The support plates are made of a material of the metal, plastic or similar type that have a coefficient of elasticity and a strength suitable for the use of the shelf of the rack.

If the flat weighing support plate is made of a rigid material, the deformable portion will include a number of deformable recesses greater than the number of deformable recesses that a flat weighing support plate made of material with a higher coefficient of elasticity would require.

The weighing support plate has a triangular or square shape of light weight and simple to manufacture which further comprises at least one recess or angled load-bearing anchor in the form of an acute angle, right angle or the like, in proximity to the upper vertex formed by the two legs of the triangular weighing plate; namely, the rear load-bearing edge and the upper edge forming the right angle of the weighing support plate.

The angled load-bearing recess is assembled within at least one upper slot of a rear vertical rack abutment to maintain the weighing plate in a vertical or inclined plane of the rack.

The inclined angle load-bearing recess has a shape that is a function of the type of vertical pillar, of the groove type, that can provide the shelf with a display inclination.

It should be noted that, even with an inclined shelf, the shear deformation is proportional to the weight of the shelf and of the loads arranged on the shelf of the rack, so that the invention is applicable and valid.

Alternatively, the weighing support plate comprises at least one additional protruding recess in proximity to the lower vertex formed by the load-bearing rear edge and the hypotenuse of the weighing support plate.

The additional protruding recess is assembled within at least one lower slot of the rear vertical abutment of the shelf to keep the shelf in a vertical plane of the rack.

The angled bearing insert rests against the lower edge of the upper groove, while the additional protruding insert rests against the inner edge of the lower groove. In this way, an additional fastening to the rear vertical pillar of the shelf is achieved for support weighing brackets intended to determine the weight of greater loads arranged on the shelf of the rack.

The deformable portion where the strain gauge is located is arranged in proximity to the load-bearing rear edge of the weighing support plate, so that the weight to be measured is arranged separately and not between the gauges and the recesses. Alternatively, the shelf rests on the plate from the gauges to the front cantilevered edge.

It should be noted that a load or part thereof located between the strain gauge sensor and the rear edge of the shelf would not deform the deformable portion and, therefore, the gauges would provide an erroneous deformation value or no measured deformation value.

If the distance between the rear edge of the deformable portion and the load-bearing rear edge of the weighing support plate is minimal, the possibility of providing an incorrect measured weight value is reduced.

The deformable portion can be formed by partially emptying it to form deformable cut-outs in the form of grooves, recesses or the like, leaving at least one flat surface, so that the strain gauge unit is coupled to the same surface.

For simplicity, the strain gauge unit is a sensor or sensors that measure the deformation in the weighing support plate, arranged to work in shear, so that they transform the deformation produced on the deformable portion of the support plate into an electrical signal proportional to the total weight deposited on the shelf of the rack, regardless of the arrangement of the loads on the shelf of the rack.

The strain gauge cell that works in shear is independent of the relative position, measured along the weighing support plate, of the load arranged above on the surface of the shelf of the rack. The position of the load between two weighing support plates transmits proportionally more load towards the nearest one, although the sum of the loads on the weighing support plates of the same shelf is equal to the weight of the shelf plus the loads arranged on it.

The weighing support plate can be assembled and removed very easily to form a shelf rack and, in addition, when assembled, constitutes a secure and firm support for the shelves.

### Brief description of the figures

A more detailed explanation of the device according to the embodiments of the invention is given in the description below , based on the attached figures in which:
Figure 1 shows an elevation view of a conventional removable shelf rack support plate;
Figure 2 shows an elevation view of a weighing support plate comprising a deformable portion including deformable recesses, made by partial emptying, for regulating the elasticity of the deformable portion and a strain gauge unit for measuring the deformation caused by the vertical load diagram of the shelf of the rack; and
Figure 3 shows an elevation view of the weighing support plate with a plurality of recesses regularly distributed on the load-bearing rear edge of the weighing support plate.

### Description

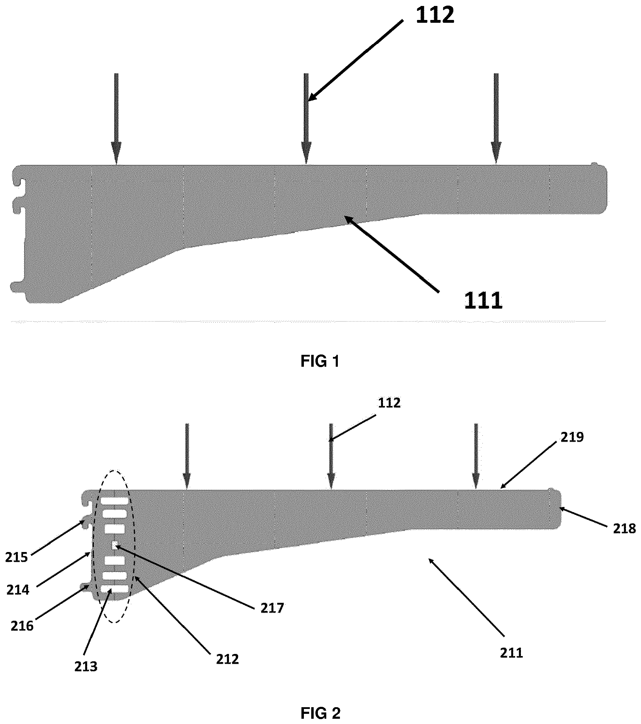

With regard to figure 1, which shows an elevation view of a conventional flat support plate 111 for supporting a shelf of a rack, wherein at least one load 112 is disposed.

The flat support plate 111 has a triangular or square basic geometric configuration that is deformable by application of a vertical load diagram 112 on the upper edge of the support plate 111. The support plate 111 comprises load-bearing recesses regularly arranged along the load-bearing rear edge of the support plate 111.

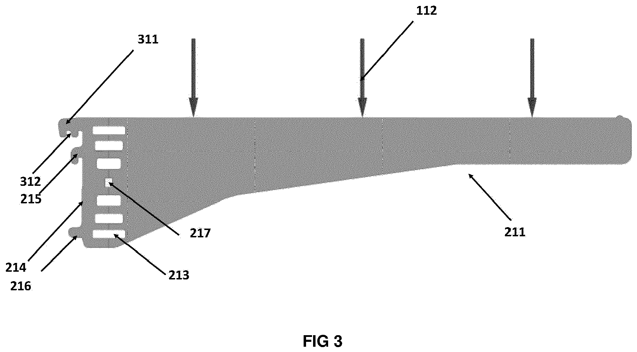

With regard to figures 2 and 3, which show a weighing plate for supporting a shelf of a dismantlable rack, where the weight plate 211 comprises a deformable portion 212 in proximity to the load-bearing rear edge 214 of the weighing plate 211.

The deformable portion 212 comprises at least one deformable cut-out 213 regularly distributed along a vertical axis parallel to the load-bearing rear edge 214, and at least one strain gauge unit 217 mechanically coupled to the deformable portion 212, which is adapted to measure the strain caused by the load 112 arranged above on the shelf of the rack.

The deformable portion 212 is arranged in proximity to a load-bearing rear edge 21 of the support plate 211. Thus, the weighing support plate 211 is configured to determine the weight value of a load diagram 112 disposed above the shelf of the rack regardless of the relative position of the load above the flat surface of the shelf, where the load 112 is disposed from the rear edge of the shelf of the rack.

The deformable portion 212 comprises at least one deformable cut-out 213. The deformable cut-out 213 is shaped as a recess, groove, elongated groove, or other alternative geometric shapes. The deformable cut-out 213 is realizable by partial emptying of the deformable portion 212.

The load diagram 112 applied along the upper edge 219 of the weighing support plate 211 elastically deforms the weighing plate 211; wherein the deformation is a function of the arrangement and number of deformable cut-outs 213 comprised within the deformable portion 212 and the type of material from which the weighing plate 211 is made. The applied load diagram 112 deforms the deformable cut-outs 215 of the deformable portion 213.

The at least one strain gauge unit 217 is integrally coupled in the deformable portion 212. The strain gauges convert the deformation of the deformable portion 212 to a measurable electrical signal proportional to the weight value associated with the weight of the shelf itself and the load 112 arranged on the shelf of the rack.

The strain gauge unit 217 is disposed within the deformable portion 212 between the load-bearing rear edge 21 of the weighing plate 211 and the load 112 disposed above on the shelf of the rack. The at least one strain gauge unit 217 is arranged in the shear deformation measurement mode of the deformable portion 212.

The strain gauges 217 are preferably arranged on the neutral fiber where, by their own definition, the bending torque is zero and the stress and shear deformation is maximum, thereby optimizing the electrical signal generated and minimizing the effects of bending deformations.

The weighing support plate 211 comprises at least one angled load-bearing recess 215, 311 arranged in proximity to the upper end vertex formed by the load-bearing rear edge 214 and the upper edge 219 of the weighing plate 211 for assembly within an assembly slot of a rear vertical pillar of the shelf.

The angled load-bearing recess is of the right-angled load-bearing recess type 215, acute-angled load-bearing recess 311, or the like.

The weighing plate 211 comprises at least one protruding recess 216 in proximity to the lower vertex formed by the supporting rear edge 214 and the hypotenuse of the supporting weighing plate 211, which is assembled within a lower assembly slot provided in the same rear vertical pillar of the shelf.

In inclined-angle weighing plates 211, the acute-angle load-bearing recess 311 comprises at least one hole 312 distributed regularly along the lower edge of the acute-angle load-bearing insert, which allows the upper vertex of the weighing plate 211 to be moved away from the rear vertical pillar of the shelf for an inclined positioning of the shelf, which facilitates the visibility and display of the load 112 arranged and stored on the shelf.

Thus, for example, shelves arranged at greater relative heights with respect to the rack support floor must have a greater inclination to facilitate the display of the loads arranged on the shelves.

In a practical way, the angled load-bearing inserts 215, 311 can be linked in order to be able to arrange the weighing plates 211 and, therefore, the shelves horizontally and/or inclined. In these cases the solution is valid as the deformations are proportional to the weights and vertical loads supported. The strain gauges 217 arranged in shear mode transform the deformation measured in the deformable portion 212 of the weighing support plate 211 to a measurable electrical signal proportional to the value of the weight transmitted by the shelf of the rack.

By combining the electrical signals, either analogue or their corresponding digital transformations, from the weighing support plates 211, the total weight supported by a single shelf is obtained.

The digital signals provided at an output of the strain gauge sensor 217 are transmittable electrically or by radio to a controller unit that, in response to the received digital signals, is capable of determining the weight disposed on the shelf or the number of loads on it if the loads 112 have a uniform weight, from the weight of a single load 112.

The strain gauges 217 are configured in shear mode; in this case the main deformations are at 45º to the vertical axis of the weighing support plate 211; +45º in compression and -45° in traction. The strain gauges 217 are connected either in a Wheatstone bridge in each weighing support plate 211, which allows to measure the weight supported by each weighing support plate 211, or in a half Wheatstone bridge completing the same with a second weighing support plate 211 for the same shelf, with which the total weight would be measured. The sum of the loads 112 can be done electrically by interconnecting the bridges or externally in the controller that combines the signals.

Alternatively, at the upper edge 219 there may be shelf supports to transmit the total load 112 in front of the position of the strain gauges 217, such that the strain gauges 217 will measure the strain of the entire load 112.

### LIST OF NUMERICAL REFERENCES

111 conventional support plate
112 load diagram
211 weighing support plate
212 deformable portion
213 deformable cut-out
214 load-bearing rear edge
215 right-angle load-bearing recess
216 protruding recess 217 acute angle load-bearing recesss strain gauge unit
218 upper edge
311 acute angle load-bearing recess
312 orifice

## Claims

1. A weighing plate supporting a shelf of a dismantlable rack; **characterized in that** the weighing plate (211) comprises a deformable portion (212) in proximity to the load-bearing rear edge (214) of the weighing plate (211); wherein the deformable portion (212) comprises at least one deformable recess (213) and at least one strain gauge unit (217) mechanically coupled to the deformable portion (212) that is adapted to measure deformation if at least one load (112) is arranged on the shelf of the rack.

2. Plate according to claim 1, wherein the at least one strain gauge unit (217) is arranged in shear mode for the deformation measurement of the deformable portion (212).

3. Plate according to claim 2; wherein the at least one strain gauge unit (217) is disposed within the deformable portion (212) between the load-bearing rear edge (214) of the weighing plate (211) and the at least one load (112) disposed on the shelf of the rack.

4. Plate according to claim 1, wherein the at least one deformable recess (213) has the shape of an elongated groove, cavity, or the like.

5. Plate according to any one of the preceding claims; wherein the weighing plate (211) has a triangular, square or similar shape.

6. Plate according to claim 5, wherein the weighing slat (211) comprises at least one angled load-bearing recess (215, 311) arranged in proximity to the upper vertex formed by the load-bearing rear edge (214) and the upper edge of the weighing plate (211).

7. Plate according to claim 6; wherein the angled load-bearing recess is of the right-angled load-bearing recess type (215), acute-angled load-bearing recess (311), or the like.

8. Plate according to claim 5, wherein the weighing plate (211) comprises at least one protruding recess (216) in proximity to the lower vertex formed by the load-bearing rear edge (214) and the hypotenuse of the weighing support plate (211).
